# EUROPEAN PATENT SPECIFICATION

(11) **EP 2 708 008 B1**
(45) Date of publication and mention of the grant of the patent: **18.01.2017**
(21) Application number: 11724539.9
(22) Date of filing: 13.05.2011
(51) Int. Cl.: H04L 29/08

(54) **A METHOD FOR OPERATING A NETWORK AND A NETWORK**
VERFAHREN FÜR DEN BETRIEB EINES NETZWERKES UND NETZWERK
PROCÉDÉ DE MISE EN FONCTIONNEMENT D'UN RÉSEAU ET RÉSEAU

(43) Date of publication of application: 19.03.2014
(73) Proprietor: NEC Corporation, Tokyo 108-8001 (JP)
(72) Inventor: SCHMIDT, Mischa, 69121 Heidelberg (DE); STIEMERLING, Martin, 69181 Leimen (DE); DIETZ, Thomas, 67366 Weingarten (DE)
(74) Representative: Patent- und Rechtsanwälte Ullrich & Naumann
(86) International application number: PCT/EP2011/002389
(87) International publication number: WO 2012/155926

(56) References cited:
- WO-A2-01/80003
- US-A1- 2003 233 469
- US-A1- 2004 221 063
- US-A1- 2005 259 682

## Description

The present invention relates to a method for operating a network, wherein the network is comprising a server and at least one client for communication with the server, wherein an application computation or operation will be performed by the server and wherein a result of the application computation or operation will be displayed at the client.

Further, the present invention relates to a network, preferably for carrying out the method for operating a network, wherein the network is comprising a server and at least one client for communication with the server, wherein an application computation or operation will be performed by the server and wherein a result of the application computation or operation will be displayed at the client.

Methods for operating a network comprising the above mentioned features are known from modern network structures. For example, so called thin client structures are increasingly popular and important within network structures of all kinds of business applications.

Using thin client approaches where application computations are performed by server infrastructure and clients use technologies like the Remote Desktop Protocol (RDP) or Virtual Network Computing (VNC) to display the computation results locally, a common problem occurs when applications require high frame rates such as video playback. Modern enhancements of RDP can define regions within the virtual Desktop at the server that are streamed at higher bitrates to the client in order to address this problem. The following description focuses on thin client environments where the server infrastructure "behaves as a normal PC" and the thin client "behaves as an input and output device" of that "PC".

While this tackles a problem of video playback, content caching techniques cannot be applied between the client and the server because of two reasons:
a) The communication between client and server is typically encrypted to provide confidentiality - a cache on the communication path between client and server thus cannot "look inside the traffic" and cache content for other clients.
b) The application is running at the server - thus, the server requests content which is then rendered to the client via aforementioned techniques. Thus, traditional caching mechanisms would only optimize the access to the content as if the server were a client.

The thin client approach is also limited in the case where a larger number of users are watching content with a high demand in bandwidth. This will result in a large need for deployed bandwidth capacity between the server side and the clients, potentially clogging the communication paths.

There is also the issue of localized content: content or auxiliaries to the content, such as advertisements, are usually tailored to a particular delivery area. This handling is performed by CDNs (Content Distribution Network), or by other means. This mechanism is lost to some extent by using a thin client approach, as the content is not requested from the client's network location, but from the location where the server is located. Even if the server would be able to detect the location of the client and include the localized content, then that content would probably travel the same way forth and back, thus doubling the used bandwidth.

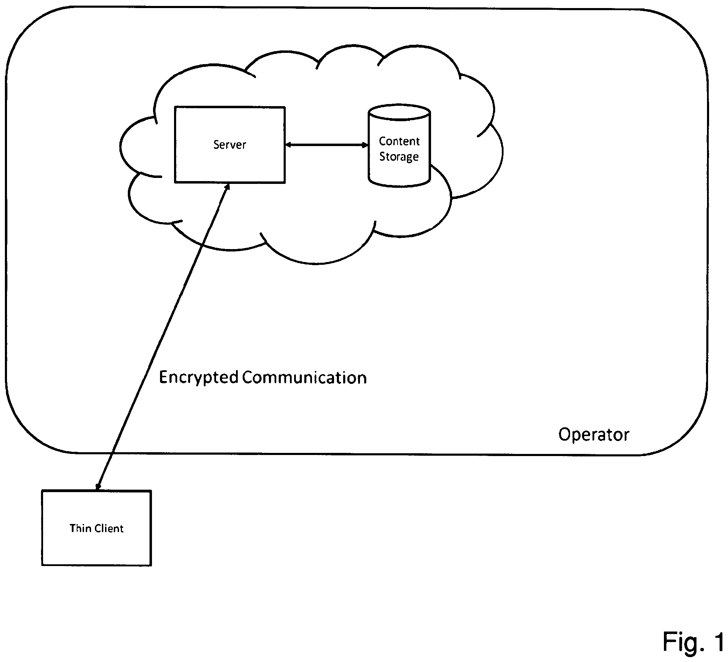

Commonly, remote desktop techniques such as RDP and VNC rely on encryption to protect the client's interactions with the desktop (on the server) such as input device (keyboard, mouse) events. At the same time, encryption is also used to protect the visual presentation of the desktop to the client against eavesdropping. Fig. 1 shows a typical scenario where one or more thin clients connect to a server.

It is an object of the present invention to improve and further develop a method for operating a network and an according network in such a way, that by simple means a reliable and high performance of the network is possible.

In accordance with the invention, the aforementioned object is accomplished by a method according to claim 1. According to this claim 1 the method is characterized in that a network element will be provided for use by the client, wherein the network element is performing at least one application computation or operation on behalf of the server.

Further, the aforementioned object is accomplished by a network according to claim 20. According to this claim 20, such a network is characterized in that a network element is provided for use by the client, wherein the network element is enabled to perform at least one application computation or operation on behalf of the server.

According to the invention it has been recognized that by the provision of only one further network element for use by the client a remarkably enhanced reliability in performance of the network is possible. Concretely, the network element will perform at least one application computation or operation on behalf of the server. Thus, an offload of the server is easily possible resulting in a reliable and high performance of the whole network, even if a large number of clients is using the network and the server.

Within a preferred embodiment the server could delegate the application computation or operation to the network element. Depending on the work load at the server one or more application computations or operations could be delegated to the network element for offloading the server.

For realizing a reliable communication between client, server and network element the network element could have a communication protocol comprising messages that - per existing client/server protocol - are required to be exchanged between client and server. Thus, usual functionalities within the client/server structure could be maintained.

Within a further preferred embodiment the communication protocol could comprise protocol information for caching logic or application logic that is to be used for communication between network element and server. Thus, caching of predefinable data is possible.

For realizing a high degree of security regarding network traffic the protocol information could be encrypted. Various encryption methods could be used.

Regarding a quick-response behavior of the network the server could be informed that there is a network element provided within the network for use by the client. Such an information could be provided by a backbone or underlying operator network.

For realizing a high degree of security and a reliable performance of the network the server could share communication keys used between the client and the server with the network element. Thus, the network element could perform operations on behalf of the server in a very secure way.

With regard to a wide-ranging offload of the server the network element could comprise an interface for retrieving content from a content source or for communication with a content source. In this case large data volumes could be retrieved by the network element by simple means.

The retrieval of data from various content sources is possible. Preferably, the content source could be the internet or a web site or a CDN (Content Distribution Network) or a local storage. The data retrieved from a CDN could comprise localized content, such as advertisements tailored to a particular delivery area.

For providing a very simple network structure the network element could be provided on a communication path between the server and the client. Such a network structure provides short communication paths between client and network element and between network element and server.

However, within a further preferred embodiment the network element could be provided available in an access domain of the client. Such a network structure provides more possibilities and more flexibility regarding the location of the network element. The location is not limited to the direct communication path between the server and the client.

For providing a very high performance of the network the client could be able to receive data from the server and/or from the network element. This will mean that data could be received from the server or from the network element or from the server and the network element in a parallel or simultaneous way. Thus, the maximum necessary data volume can be received by the client.

Within a preferred embodiment the application computation or operation could comprise a video application or a rendering of videos from a video source. However, other application computations or operations are possible.

Within a further preferred embodiment and especially once the server knows that it can rely on a network element the server - in case of a content usage - could instruct the network element in which display region of the client desktop the content will be played back and which content will be used. The network element could then fetch the content from a content storage and could insert the content in the instructed display region. Thus, a simple offload of the server is possible.

For realizing a simple caching mechanism the network element could store content delivered to one client for use in communication of another client with the server. Depending on the individual situation the network element may or may not store such a content. Thus, a flexible functionality is realized.

Generally with regard to a flexible usage of the network element the network element could cache content or at least one definable application. The cached content could also depend on the individual situation.

For realizing a very simple network structure the network element could be part of a CDN.

Within a further preferred embodiment different transport protocols could be used between the server and the network element and between the network element and the client. Within a concrete embodiment the server could always run its standard transport protocols, whereas the network element could implement a specialized version towards the client.

Generally the present method for operating a network could be performed within a thin client and server structure.

The present invention allows to cache along the communication path between client and server. Further, the present invention could provide a thin client scenario with caching of content and, if desired, a combination of thin client and CDN technology.

According to important aspects of the present invention the caching of video content closer to the thin client is enabled, even in case of a thin client scenario. Further, encryption between client and an operator can be preserved.

The offload of a backbone network, even in a thin client scenario, and the offload of a thin client server for rendering highly dynamic and bandwidth intense content is possible.

The invention can be introduced gradually: First, servers could be upgraded and then respective network elements could be introduced. No client update will be needed, if the network element is located on the communication path between client and server.

Further, geographic information about clients can be used in the thin client or client scenario. Regarding another aspect of the invention the adaptation of transport protocols within the network element is possible.

The present invention leverages caching technology for thin client scenarios and offloads thin client server and backbone network. Further, the localization of content services within thin client scenarios is possible.

The present invention provides a method to proxy thin client protocols and/or to splice security of a thin client protocol. Further, the method enables the distribution of DRM (Digital Rights Management) to different entities without each thin client server requiring the rights for the content.

There are several ways how to design and further develop the teaching of the present invention in an advantageous way. To this end it is to be referred to the patent claims subordinate to patent claim 1 on the one hand and to the following explanation of preferred embodiments of the invention by way of example, illustrated by the figures on the other hand. In connection with the explanation of the preferred embodiments of the invention by the aid of the figures, generally preferred embodiments and further developments of the teaching will we explained. In the drawing
- Fig. 1: is showing a typical scenario where one or more thin clients connect to a server according to a basic thin client concept,
- Fig. 2: is showing a first embodiment of a network according to the invention and
- Fig. 3: is showing a possible protocol stack according to a further embodiment of the invention.

Fig. 1 is showing a typical scenario, where one or more thin clients connect to a server. The communication between the thin client and the server is encrypted. The server is in communication with a content storage. The network will be managed by an operator.

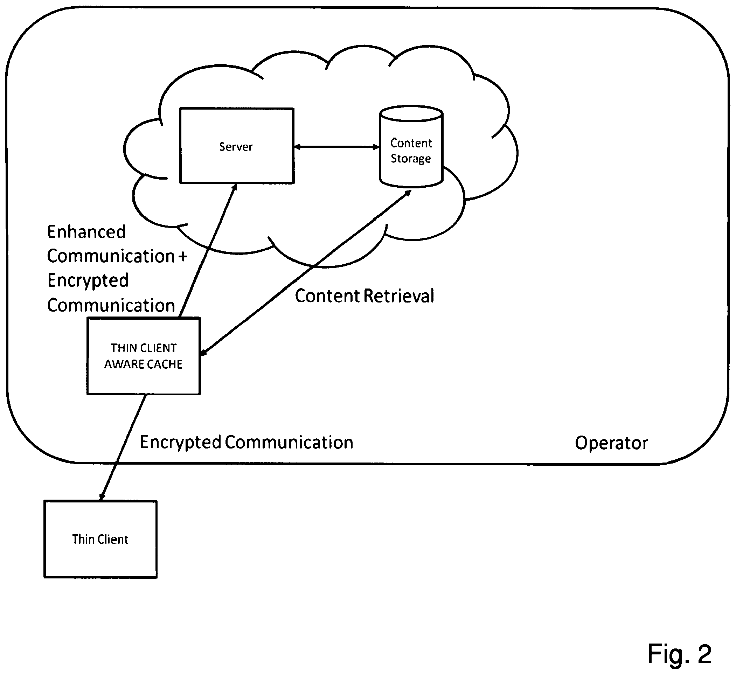

Fig. 2 is showing a network according to a first embodiment of the present invention. In the following the provided network element will be by way of example designated as Thin Client Aware Cache (TCAC). The TCAC is located on the communication path between a thin client and a server. The TCAC is comprising an enhanced communication protocol with the server that consists of:
1. The messages that per existing thin client protocols are required to be exchanged between client and server.
2. Additional protocol information (potentially encrypted) for caching logic or application logic that is to be used between cache and server which are referred to as TCACP (TCAC Protocol).

The TCAC is further comprising (not shown) an interface to the "outside" world in order to retrieve content from a content source, e.g. either a web side or a CDN.

The TCACP is used for the following:
a) Inform server that there is a TCAC on the communication path between client and server or at least that there is a TCAC available in the access domain of the client that could be used.
b) The Server may share the communication keys used between client and server with the TCAC - so that the TCAC or network element can perform operations on behalf of the server, such as alter/inject/modify/interact the data between client and server.
c) In particular, the server may tell the Cache that e.g. a video application was requested by the client to view a particular content, which particular content, plus which region of the displayed desktop is occupied by this application.

Once the server knows that it can rely on a TCAC or network element, it can instruct the TCAC in case of content usage in which region of the desktop the content will be played back and which content will be used. The TCAC will then actually fetch the content from the content storage and insert the video data in the instructed region towards the client. In another embodiment, the thin client server may be configured whether to use TCAC or not and/or which TCAC to use rather than discovering it per TCACP.

In another, more general, embodiment - in contrast to Fig. 1 - the TCAC does not need to be on the initial thin client traffic path. In this case the server needs to learn/be configured/know that a TCAC is in the network and is available for use. The server then includes the TCAC in the traffic. This may require that the thin client and the thin client protocol is able to receive from the server and the TCAC data on the thin client session or that thin client traffic is rerouted.

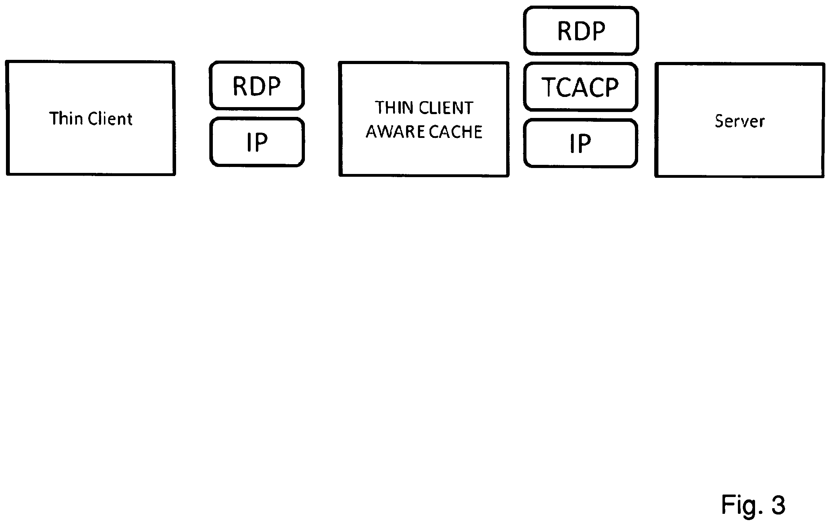

Fig. 3 shows a possible protocol stack. Here it is evident that additional information is exchanged between TCAC and Server without the Thin Client's awareness.

The TCACP may need to send error/status messages back to the server. This way, the state between server and TCAC is synchronized and consistent. In particular, the server functions to use TCAC must be consistent with the TCAC features, e.g. in case a TCAC can only render H.264 encoded videos, the server shall not instruct the TCAC to fetch and display MPEG-2 encoded videos.

In general, also other content/applications can be cached in the TCAC: e.g. in case of internet sourced content which is to be rendered in a browser (e.g. YouTube videos, etc), the TCAC can be instructed via the TCACP to render that content at particular screen coordinates to the client - thus enabling the TCAC to cache content (ideally popular content) closer to the thin client, i.e. closer to the network edge.

This setting additionally allows separating the transport between server and client. In certain network environments, e.g., mobile terminals, specialist transport protocols or adaptations of transport protocols, e.g., TCP tailored to mobile environments, the server can always run its standard transport protocols, whereas the cache or TCAC or network element can implement a specialized version towards the thin client.

In particular technical realizations, the TCAC may be part of a CDN solution. As such, the TCAC might receive content based on CDN policies (e.g. "pre-positioned") and should implement CDN mechanisms, protocols and obey the CDN's policies.

The TCAC may or may not store content delivered to one thin client for use in other thin clients' sessions.

The TCAC may fetch the content from servers anywhere in the internet.

The TCAC may need to host DRM client functionality in order to decode DRM protected content and stream it to the thin client. Since the TCAC is geographically closer to the thin client user than the thin client server, it is likely that the TCAC can also enforce restrictions of content consumption based on DRM and geographic information more accurate than if the thin client server alone has to implement this. For example: Assume the thin client being abroad and connecting via IP to the thin client server in the home country. Assuming the thin client user is a legitimate subscriber of DRM protected content within his home country but not abroad, the server will request content from a CDN and he will be granted access to the content despite that fact that the thin client is abroad and thus should not be eligible to receive the content. Assuming the TCAC would be situated abroad, near the thin client, it is much more likely that the DRM system rightfully is able to restrict the content consumption despite the thin client server being located in an eligible content consumption region.

The thin client may be upgraded so that it can handle receiving multiple data streams, e.g., one from the thin client server and the other from the TCAC; the thin client would mix both data streams locally and displays the combined result to the user. In this case the TCAC does not need to be located on the communication path between thin client and server. Examples for the data streams are the PC desktop sent by the server and a movie stream sent by the TCAC.

The TCACP may explicitly indicate the capabilities and features of a TCAC to the thin client server, so that it can act accordingly, e.g. only delegate some of the content rendering, in case of different content codecs.

The TCACP may offer to the server to provide capabilities and feature (e.g. through software packages, OSGI bundles etc) to the TCAC in order to be able to fulfill the desired tasks.

In another embodiment, the server and TCAC may be manageable so that the TCAC capabilities and the server are synchronized, i.e. a management system that installs new capabilities, such as decoding particular video types, in the TCAC and at the same time configures the server so that it makes use of said installed functionality.

Depending on different content delivery/access technologies, different methods are used to identify/authenticate/validate user content access operations. Depending on the technology, the server, the TCAC and the TCACP may need different features. The following list provides some examples:
a) If a content storage (system) uses the "token" mechanism where the token (or another piece of data) is generated by (or is stored on) an eligible client is transmitted to the content storage by means of a (HTTP-) URL parameter for authentication, that information/data must be carried in the TCACP when passing the content URL from the thin client server to the TCAC. The TCACP should indicate the protocol how the TCAC accesses the content. The TCAC does not need additional functionality besides supporting the indicated protocol to access the content.
b) A content storage (system) uses a mechanism where a token (or another piece of data) is generated by (or is stored on) an eligible client is transmitted to the content storage by means of a (HTTP-) Header or Protocol payload for authentication, that information/data must be carried in the TCACP from the thin client server to the TCAC plus the means of transmitting the authentication data to the content storage (system) (e.g. use HTTP header, use payload). The TCACP should indicate the protocol how the TCAC accesses the content. The TCAC then needs to be able to request the content as the thin client server would do and provide the authentication data as well as the indicated protocol.

Typical examples of thin client technologies that may benefit from this invention are: mobile devices, virtual set top box services, thin client service offerings (e.g. "PC as a Service") and TV services.

The present invention enables the implementation with a "transparent" TCAC proxy. Further, the invention enables the implementation with a different protocol between TCAC and thin client server. The server can extend TCAC functionality by carrying software in TCACP. Further, the TCAP can be used to exchange and/or negotiate capabilities between thin client server and TCAC. The protocol between thin client and thin client server can be upgraded to perform the above functionalities.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for operating a network, wherein the network is comprising a server and at least one client for communication with the server, wherein an application computation or operation will be performed by the server, wherein a result of the application computation or operation will be displaced at the client, wherein a network element will be provided for use by the client and wherein the network element is performing at least one application computation or operation on behalf of the server,
**characterized in that** - in case of a content usage - the server instructs the network element in which display region of the client desktop the content will be played back and which content will be used.

2. A method according to claim 1, wherein the server delegates the application computation or operation to the network element.

3. A method according to claim 1 or 2, wherein the protocol information is encrypted.

4. A method according to one of claims 1 to 3, wherein the server will be informed that there is a network element provided within the network for use by the client.

5. A method according to one of claims 1 to 4, wherein the network element is comprising an interface for retrieving content from a content source or for communication with a content source.

6. A method according to claim 5, wherein the content source is the internet or a web site or a CDN (Content Distribution Network) or a local storage.

7. A method according to one of claims 1 to 6, wherein the network element will be provided on a communication path between the server and the client.

8. A method according to one of claims 1 to 6, wherein the network element will be provided available in an access domain of the client.

9. A method according to one of claims 1 to 8, wherein the client is able to receive data from the server and/or from the network element.

10. A method according to one of claims 1 to 9, wherein the application computation or operation is comprising a video application or a rendering of videos from a video source.

11. A method according to one of claims 1 to 10, wherein the network element fetches the content from a content storage and inserts the content in the instructed display region.

12. A method according to one of claims 1 to 11, wherein the network element is part of a CDN.

13. A method according to one of claims 1 to 12, wherein different transport protocols are used between the server and the network element and between the network element and the client.

14. A network for carrying out the method for operating a network according to any one of claims 1 to 13, wherein the network is comprising a server and at least one client for communication with the server, wherein an application computation or operation will be performed by the server, wherein a result of the application computation or operation will be displayed at the client, wherein a network element is provided for use by the client and wherein the network element is enabled to perform at least one application computation or operation on behalf of the server, **characterized in that** - in case of a content usage - the server is arranged for instructing the network element in which display region of the client desktop the content will be played back and which content will be used.

## Patentansprüche

1. Ein Verfahren zum Betreiben eines Netzwerks, wobei das Netzwerk einen Server und zumindest einen Client zur Kommunikation mit dem Server aufweist, wobei eine Anwendungsberechnung oder -operation durch den Server durchgeführt wird, wobei ein Ergebnis der Anwendungsberechnung oder -operation bei dem Client angezeigt wird, wobei ein Netzwerkelement zur Verwendung durch den Client bereitgestellt wird und wobei das Netzwerkelement zumindest eine Anwendungsberechnung oder -operation für den Server durchführt,
**dadurch gekennzeichnet, dass** - im Fall einer Inhaltsnutzung - der Server das Netzwerkelement instruiert, in welchem Displaybereich des Clientdesktops der Inhalt wiedergegeben wird und welcher Inhalt genutzt wird.

2. Ein Verfahren nach Anspruch 1, wobei der Server die Anwendungsberechnung oder -operation an das Netzwerkelement delegiert.

3. Ein Verfahren nach Anspruch 1 oder 2, wobei die Protokollinformation verschlüsselt wird.

4. Ein Verfahren nach einem der Ansprüche 1 bis 3, wobei der Server darüber informiert wird, dass ein Netzwerkelement vorliegt, das innerhalb des Netzwerks zur Verwendung durch den Client bereitgestellt ist.

5. Ein Verfahren nach einem der Ansprüche 1 bis 4, wobei das Netzwerkelement eine Schnittstelle zum Abrufen von Inhalt von einer Inhaltsquelle oder zur Kommunikation mit einer Inhaltsquelle aufweist.

6. Ein Verfahren nach Anspruch 5, wobei die Inhaltsquelle das Internet oder eine Website oder ein CDN (Content Distribution Network) oder ein lokaler Speicher ist.

7. Ein Verfahren nach einem der Ansprüche 1 bis 6, wobei das Netzwerkelement auf einem Kommunikationspfad zwischen dem Server und dem Client bereitgestellt wird.

8. Ein Verfahren nach einem der Ansprüche 1 bis 6, wobei das Netzwerkelement in einer Zugangsdomain des Client verfügbar bereitgestellt wird.

9. Ein Verfahren nach einem der Ansprüche 1 bis 8, wobei der Client in der Lage ist, Daten von dem Server und/oder von dem Netzwerkelement zu empfangen.

10. Ein Verfahren nach einem der Ansprüche 1 bis 9, wobei die Anwendungsberechnung oder -operation eine Videoanwendung oder ein Wiedergeben von Videos von einer Videoquelle umfasst.

11. Ein Verfahren nach einem der Ansprüche 1 bis 10, wobei das Netzwerkelement den Inhalt von einem Inhaltsspeicher abruft und den Inhalt in den instruierten Displaybereich einsetzt.

12. Ein Verfahren nach einem der Ansprüche 1 bis 11, wobei das Netzwerkelement Teil eines CDN ist.

13. Ein Verfahren nach einem der Ansprüche 1 bis 12, wobei unterschiedliche Transportprotokolle zwischen dem Server und dem Netzwerkelement und zwischen dem Netzwerkelement und dem Client verwendet werden.

14. Ein Netzwerk zum Durchführen des Verfahrens zum Betreiben eines Netzwerks nach einem der Ansprüche 1 bis 13, wobei das Netzwerk einen Server und zumindest einen Client zur Kommunikation mit dem Server aufweist, wobei eine Anwendungsberechnung oder -operation durch den Server durchgeführt wird, wobei ein Ergebnis der Anwendungsberechnung oder -operation bei dem Client angezeigt wird, wobei ein Netzwerkelement zur Verwendung durch den Client bereitgestellt ist und wobei das Netzwerkelement in die Lage versetzt ist, zumindest eine Anwendungsberechnung oder -operation für den Server durchzuführen,
**dadurch gekennzeichnet, dass** - im Fall einer Inhaltsnutzung - der Server ausgebildet ist, um das Netzwerkelement zu instruieren, in welchem Displaybereich des Clientdesktops der Inhalt wiedergegeben wird und welcher Inhalt genutzt wird.

## Revendications

1. Procédé d'exploitation d'un réseau, dans lequel le réseau comporte un serveur et au moins un dispositif client en vue d'une communication avec le serveur, dans lequel une opération ou un calcul d'application sera mis en oeuvre par le serveur, dans lequel un résultat de l'opération ou du calcul d'application sera affiché au niveau du dispositif client, dans lequel un élément de réseau sera fourni en vue d'être utilisé par le dispositif client et dans lequel l'élément de réseau met en oeuvre au moins une opération ou un calcul d'application pour le compte du serveur,
**caractérisé en ce que** - dans le cas d'une utilisation de contenu - le serveur indique à l'élément de réseau dans quelle zone d'affichage du bureau de dispositif client le contenu sera lu et quel contenu sera utilisé.

2. Procédé selon la revendication 1, dans lequel le serveur délègue l'opération ou le calcul d'application à l'élément de réseau.

3. Procédé selon la revendication 1 ou 2, dans lequel les informations de protocole sont chiffrées.

4. Procédé selon l'une quelconque des revendications 1 à 3, dans lequel le serveur sera informé du fait qu'il existe un élément de réseau fourni dans le réseau, destiné à être utilisé par le dispositif client.

5. Procédé selon l'une quelconque des revendications 1 à 4, dans lequel l'élément de réseau comporte une interface destinée à récupérer du contenu à partir d'une source de contenu ou à communiquer avec une source de contenu.

6. Procédé selon la revendication 5, dans lequel la source de contenu est le réseau Internet, ou un site web, ou un réseau de distribution de contenu (CDN), ou un stockage local.

7. Procédé selon l'une quelconque des revendications 1 à 6, dans lequel l'élément de réseau sera fourni sur un chemin de communication entre le serveur et le dispositif client.

8. Procédé selon l'une quelconque des revendications 1 à 6, dans lequel l'élément de réseau sera fourni et disponible dans un domaine d'accès du dispositif client.

9. Procédé selon l'une quelconque des revendications 1 à 8, dans lequel le dispositif client est apte à recevoir des données en provenance du serveur et/ou de l'élément de réseau.

10. Procédé selon l'une quelconque des revendications 1 à 9, dans lequel l'opération ou le calcul d'application comporte une application de vidéos ou une restitution de vidéos à partir d'une source de vidéos.

11. Procédé selon l'une quelconque des revendications 1 à 10, dans lequel l'élément de réseau récupère le contenu à partir d'un stockage de contenu et insère le contenu dans la zone d'affichage indiquée.

12. Procédé selon l'une quelconque des revendications 1 à 11, dans lequel l'élément de réseau fait partie d'un réseau CDN.

13. Procédé selon l'une quelconque des revendications 1 à 12, dans lequel différents protocoles de transport sont utilisés entre le serveur et l'élément de réseau et entre l'élément de réseau et le dispositif client.

14. Réseau destiné à mettre en oeuvre le procédé d'exploitation d'un réseau selon l'une quelconque des revendications 1 à 13, dans lequel le réseau comporte un serveur et au moins un dispositif client en vue d'une communication avec le serveur, dans lequel une opération ou un calcul d'application sera mis en oeuvre par le serveur, dans lequel un résultat de l'opération ou du calcul d'application sera affiché au niveau du dispositif client, dans lequel un élément de réseau est fourni en vue d'être utilisé par le dispositif client et dans lequel l'élément de réseau est activé de manière à mettre en oeuvre au moins une opération ou un calcul d'application pour le compte du serveur,
**caractérisé en ce que** - dans le cas d'une utilisation de contenu - le serveur est agencé de manière à indiquer à l'élément de réseau dans quelle zone d'affichage du bureau de dispositif client le contenu sera lu et quel contenu sera utilisé.
